# EUROPÄISCHE PATENTSCHRIFT

(11) **EP 1 518 316 B1**
(45) Veröffentlichungstag und Bekanntmachung des Hinweises auf die Patenterteilung: **03.01.2007**
(21) Anmeldenummer: 03714880.6
(22) Anmeldetag: 26.03.2003
(51) Int. Cl.: H02P 3/18

(54) **ELEKTROWERKZEUGGERÄT**
ELECTRIC DRIVEN TOOL DEVICE
MACHINE-OUTIL ELECTRONIQUE

(30) Priorität: 16.04.2002 DE 10216836
(43) Veröffentlichungstag der Anmeldung: 30.03.2005
(73) Patentinhaber: Metabowerke GmbH, 72622 Nürtingen (DE)
(72) Erfinder: SCHMOHL, Michael, 72119 Ammerbuch (DE)
(74) Vertreter: Dreiss, Fuhlendorf, Steimle & Becker
(86) Internationale Anmeldenummer: PCT/EP2003/003111
(87) Internationale Veröffentlichungsnummer: WO 2003/088470

(56) Entgegenhaltungen:
- WO-A-99/03193
- DE-A- 3 447 354
- DE-A- 19 944 194
- US-A- 6 166 502
- US-A1- 2002 117 992

## Beschreibung

Die Erfindung betrifft ein Elektrowerkzeuggerät, insbesondere ein Elektrohandwerkzeuggerät, mit einem Asynchronelektromotor oder einem bürstenlosen Synchronelektromotor und einer rechnergesteuerten Motorsteuereinrichtung, also mit einer insbesondere mikroprozessorgesteuerten Steuerelektronik.

Elektrohandwerkzeuggeräte werden überwiegend von Elektromotoren mit einem Stromwender oder Kommutator in Verbindung mit Kohlebürsten angetrieben, insbesondere kommen sogenannte Universalmotoren zum Einsatz. Kohlebürsten unterliegen einem stetigen Verschleiß und müssen nach einiger Zeit ausgewechselt werden. Derartige Stromwendermotoren haben bis zu einer gewissen Belastung eine nahezu lineare Leistungscharakteristik derart, dass bei höherer Belastung die Motordrehzahl sinkt, wobei der Motorstrom ansteigt. Es gibt aber auch Elektrohandwerkzeuggeräte mit geregelten Stromwendermotoren. Dabei wird meist über eine Phasenanschnittsteuerung die Motordrehzahl bei ansteigender Belastung konstant gehalten, wie z. B. bei dem von der Anmelderin unter dem Handelsnamen "Vario-Constamatik" vertriebenen Elektrowerkzeuggerät. Übersteigt jedoch die Belastung des Motors einen gewissen Wert, so kann nicht mehr durch die Steuerelektronik nachgeregelt werden, und es ergibt sich dann zwangsläufig die Kennlinie des ungeregelten Motors.

Es ist auch bekannt, bei sogenannten halbstationären Elektrowerkzeuggeräten, wie z. B. Tischkreissägen, Tischhobelmaschinen, Bandrichtmaschinen, etc., einen Asynchronelektromotor oder einen Synchronelektromotor einzusetzen, die mit einer konstanten Frequenz der Motorerregerspannung betrieben werden. Insbesondere wird hierbei als Frequenz die Netzfrequenz, in Europa also 50 Hertz bzw. in den USA 60 Hertz gewählt. Mit DE 298 09 768 U1 ist ein halbstationäres Elektrowerkzeuggerät in Form einer Tischkreissäge bekannt geworden mit einem Asynchronelektromotor oder einem Synchronelektromotor, der jedoch unter Verwendung eines Frequenzumrichters bei einer gegenüber der Netzfrequenz höheren konstanten Frequenz von 300 bis 400 Hertz betrieben wird. Infolgedessen ist auch die Motordrehzahl entsprechend erhöht, und es ist im Antriebsmotor ein Untersetzungsgetriebe nachgeordnet.

Aus DE 198 16 684 A1 ist ein Elektrohandwerkzeuggerät mit einem kohlebürstenlosen Elektromotor beschrieben, wobei eine den Antriebsmotor und die unmittelbar für dessen Ansteuerung notwendigen elektrischen Bauteile der Motorsteuerung enthaltende Geräteeinheit und eine externe separate Stromversorgungseinheit vorgesehen ist.

Ferner ist aus DE 19944194 A1 ein elektronisch kommutierbarer Motor mit Überlastschutz, bekannt.

Aufgabe der vorliegenden Erfindung ist es, ein Elektrowerkzeuggerät zu schaffen, welches eine lineare Leistungscharakteristik wie bei einem Kohlebürsten aufweisenden Stromwendermotor aufweist, ohne jedoch ein verschleißanfälliges Kommutator-Kohlebürsten-System zu benötigen. Die Motorsteuereinrichtung soll auch ohne aufwändige Sensoren, wie z. B. Tachosensoren, Hall-Sensoren, auskommen.

Diese Aufgabe wird bei einem Elektrohandwerkzeuggerät der genannten Art gelöst, welches gekennzeichnet ist durch einen von der Motorsteuereinrichtung steuerbaren Frequenzumrichter, mittels dessen eine Motor (erreger) spannung an den Motor anlegbar ist, und durch einen den Motorstrom erfassenden und mit der Motorsteuereinrichtung zusammenwirkenden Stromaufnehmer, und dadurch, dass die Motorsteuereinrichtung so ausgebildet ist, dass in einer ersten Phase des Motorbetriebs bei Motorströmen bis zu einem Grenzstrom I_{(grenz)} die Frequenz des Motorstroms konstant gehalten wird und dass in einer zweiten Phase des Motorbetriebs bei Belastungen oberhalb derjenigen Belastung, bei der der Motorstrom den Grenzstrom I_{(grenz)} erreicht, die Frequenz des Motorstroms so herabgesetzt wird, dass der Motorstrom bei einem konstanten Wert gehalten wird. - Wenn vorstehend von einem Grenzstrom I_{(grenz)} die Rede ist, so wird hierunter eine Erregerstromstärke verstanden, die unterhalb des Kipp-Punkts liegt, also unterhalb derjenigen Stromstärke, bei der der Elektromotor stehen bleibt. Vorzugsweise wird der Grenzstrom zwischen 5 und 15 % geringer gewählt als die Stromstärke am Kipp-Punkt. Bei starken Elektromotoren kann der Grenzstrom I_{(grenz)} zwischen 15 und 20 A liegen und bei schwach belastbaren Elektromotoren bei 4-8 A.

Der Antriebsmotor wird also bis zu einer Belastung, die einem Grenzstrom I_{(grenz)} entspricht, mit einer konstanten Frequenz F betrieben. Dies ergibt eine nahezu waagerechte Motorkennlinie, wenn man die Motordrehzahl N in Abhängigkeit von der Belastung bzw. dem vom Motor erbrachten Drehmoment M aufträgt. Bei Erhöhung der Belastung, also mit zunehmendem Drehmoment M, sinkt die Motordrehzahl N nur unwesentlich aufgrund des sogenannten Schlupfes des Elektromotors. Damit entspricht dieser erste Betriebsbereich im Prinzip der normalen Kennlinie eines ungeregelten Synchron- oder Asynchronelektromotors bei Belastungen in hinreichender Entfernung vom sogenannten Kipp-Punkt. Andererseits entspricht dieser Bereich der Kennlinie auch in etwa der Kennlinie eines über Phasenanschnittsteuerung geregelten Universalmotors (Reihenschlussmotors) mit einem Kommutator-Kohlebürsten-System.

Wenn die Belastung bzw. das vom Elektromotor aufgebrachte Drehmoment einer bestimmten Größe I_{(grenz)} des Motorstroms entspricht, wird der Antriebsmotor mittels der Motorsteuereinrichtung mit einer variablen Frequenz betrieben, und zwar derart, dass der Motorstrom I konstant bleibt. Wenn vorliegend vom Motorstrom die Rede ist, so wird hierunter der durch Wicklungen des Ständers oder Stators des Motors fließende Motorerregerstrom verstanden. Es wird also in diesem zweiten Belastungsbereich eine bestimmte Größe des Motorstroms I durch Veränderung der Frequenz eingeregelt. In vorteilhafter Weiterbildung des Elektrowerkzeuggeräts ist die Motorsteuereinrichtung so ausgebildet, dass der Motorstrom während dieser zweiten Phase auf dem konstanten Wert I_{(grenz)} gehalten wird.

Nach einer weiteren bevorzugten Ausführungsform der Erfindung ist die Motorsteuereinrichtung so ausgebildet, dass die an den Motor angelegte Spannung (die Motorerregerspannung) während dieser zweiten Phase ebenfalls auf einem konstanten Wert gehalten wird. Vorteilhafterweise ist die Motorsteuereinrichtung so ausgebildet, dass die an den Motor angelegte Spannung während der ersten und der zweiten Phase auf einem konstanten, insbesondere dem gleichen Wert gehalten wird.

Zur Ausführung des vorstehend erwähnten Regelvorgangs hat es sich als vorteilhaft erwiesen, wenn der Stromaufnehmer einen Shunt-Widerstand umfasst, der in vorteilhafter Weise direkt über einen Spannungsabgriff als Strommessmittel verwendet werden kann.

Es hat sich des Weiteren als vorteilhaft erwiesen, wenn in Abhängigkeit von der Auslegung der geforderten Motorleistung die Größe des Grenzstroms I_{(grenz)} zwischen 4 und 20 Ampere, insbesondere zwischen 10 und 15 Ampere gewählt ist.

Es erweist sich des Weiteren als zweckmäßig, wenn der Frequenzumrichter und die Motorsteuereinrichtung sowie der den Motorstrom erfassende Stromaufnehmer auf einer gemeinsamen Platine ausgebildet und/oder in einem geschlossenen Elektronikgehäuse angeordnet sind und somit als einzige Baugruppe verbaubar sind.

In weiterer Ausbildung der Erfindung von besonderer Bedeutung ist die Motorsteuereinrichtung so ausgebildet, dass während einer dritten Phase des Motorbetriebs, die dadurch gekennzeichnet ist, dass sich der Motorstrom bei weiter ansteigender Belastung nicht mehr allein durch Absenken der Frequenz des Motorstroms konstant halten lässt, auch die Motorspannung abgesenkt wird. Wenn also die vorstehend beschriebene Motorregelung während der zweiten Phase bei weiter ansteigender Belastung an ihre Grenzen stößt, weil durch weitere Absenkung der Frequenz der Motorstrom nicht mehr konstant gehalten werden kann, so stößt der Motor an eine Regelgrenze. Es wird nun in Weiterbildung der Erfindung vorgeschlagen, sowohl die Frequenz als auch die Motorspannung zu verändern, und zwar abzusenken, mit der Folge, dass die Motordrehzahl sehr stark und für den Benutzer spürbar abnimmt, sodass der Benutzer schnell merkt, dass der Motor überlastet ist und die Belastung entsprechend absenken kann. Damit wird ein Kippen des Motors verhindert.

In weiterer Ausbildung dieses Erfindungsgedankens kann die Motorsteuerung so ausgebildet sein, dass bei Erreichen einer Motorspannung U_{(grenz)} während der dritten Phase der Motor dann abgeschaltet wird oder dass anstelle eines Abschaltens des Motors eine Resterregung an den Motor angelegt wird, damit nach Wegnahme der Belastung der Motor selbsttätig wieder anlaufen kann und damit in den normalen Regelbetrieb eingetreten werden kann.

Die Erfindung betrifft aber auch ein Verfahren zum Betreiben eines Elektrohandwerkzeuggeräts mit einem Asynchronelektromotor oder einem bürstenlosen Synchronelektromotor und einer rechnergesteuerten Motorsteuereinrichtung mit den Merkmalen des Anspruchs 11. Bevorzugte Ausführungsformen dieses erfindungsgemäßen Verfahrens ergeben sich aus den Ansprüchen 12 bis 18.

Mit dem erfindungsgemäßen Elektrowerkzeuggerät und unter Ausführung des erfindungsgemäßen Verfahrens zum Betreiben eines Elektrowerkzeuggeräts kann eine Motorcharakteristik oder Leistungscharakteristik erhalten werden, wie sie ein Benutzer von Elektrowerkzeuggeräten mit einem Kohlebürsten aufweisenden Kommutatorsystem, von sogenannten Universalmotoren, gewohnt ist, ohne dass jedoch ein solches Verschleiß behaftetes Kommutator-Kohlebürsten-System zum Einsatz kommt. Auf der anderen Seite erweist es sich als vorteilhaft, dass trotz Verwendung von Asynchronelektromotoren oder bürstenlosen Synchronelektromotoren das bei diesen Motoren an sich übliche "Kippen" des Motors verhindert werden kann. Der Motor wird stets in einem für die gerade auftretende Belastung optimalen Betriebspunkt durch Wahl der optimalen Frequenz betrieben.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der Erfindung. In der Zeichnung zeigt:
- Fig. 1: in schematischer Darstellung die Schaltung eines erfindungsgemäßen Elektrohandwerkzeuggeräts.
- Fig. 2: ein Motordiagramm durch Auftragung der Motordrehzahl N über dem Motordrehmoment M.

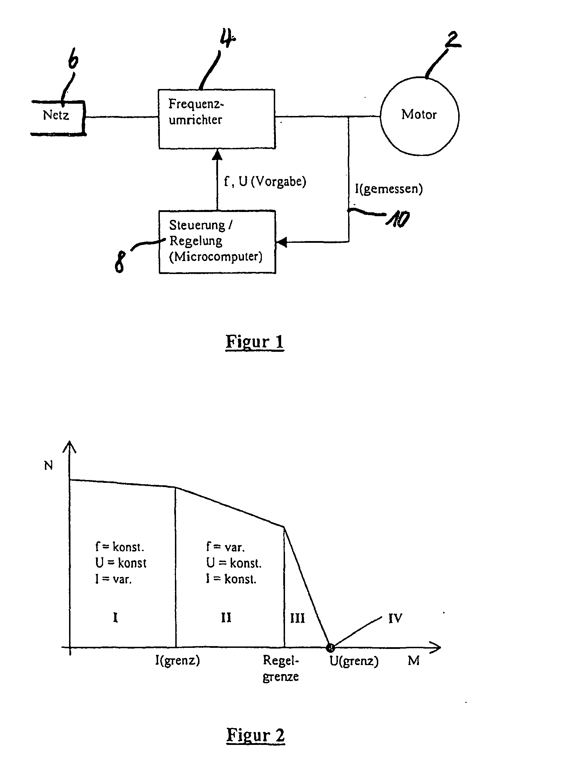

Figur 1 zeigt schematisch den grundsätzlichen Aufbau der Motorsteuerung bei einem erfindungsgemäßen Elektrowerkzeuggerät. Der Motor 2, ein Asynchronelektromotor oder ein bürstenloser Synchronelektromotor, ist an einen mit Netzspannung gespeisten Frequenzumrichter 4 angeschlossen, von dem er die Motorversorgungs- oder Motorerregerspannung erhält. Der Freqenzumrichter 4 ist an das normale Stromnetz 6 mit z. B. 230 V/50Hz angeschlossen. Ferner ist eine mikroprozessorbetriebene Motorsteuereinrichtung 8 vorgesehen, welche den Frequenzumrichter 4 ansteuert und die Vorgabe für die Frequenz der Motorerregerspannung sowie für die Größe der Motorerregerspannung an den Frequenzumrichter 4 gibt. Ferner ist ein Stromaufnehmer 10 in einer jeweiligen Ansteuerleitung zwischen Frequenzumrichter 4 und Elektromotor 2 vorgesehen. Es kann sich hierbei in vorteilhafter Weise um einen Shunt-Widerstand 12 handeln, mittels dessen über an sich bekannte und daher nicht dargestellte elektronische Abgriffsschaltungen eine dem Motorstrom entsprechende Größe erzeugt und der Motorsteuereinrichtung 8 als Eingangsgröße eingegeben werden kann. Der Frequenzumrichter 4, die Motorsteuereinrichtung 8 sowie der Stromwertaufnehmer 10 mit nicht dargestellter Schaltung sind in einem Maschinengehäuse des Elektrowerkzeuggeräts auf einer gemeinsamen Platine oder in einem gegen Feuchtigkeit geschützten Elektronikgehäuse als Baugruppe angeordnet bzw. untergebracht.

Figur 2 zeigt ein Motordiagramm, wobei die Motordrehzahl N als Funktion des Motordrehmoments M, also als Funktion der Belastung des Elektromotors aufgetragen ist. Bis zu einem Grenzstrom I_{(grenz)} wird die Frequenz der Motorerregerspannung und auch die Größe dieser Spannung konstant gehalten. Damit läuft der Elektromotor mit etwa konstanter Drehzahl N in dem mit I bezeichneten Gebiet.

Steigt der Motorstrom infolge zunehmender Belastung über den Grenzwert I_{(grenz)}, so wird über die Motorsteuereinrichtung die Frequenz der Motorerregerspannung so geregelt, dass der Motorstrom I konstant bleibt, und zwar vorzugsweise auf dem Grenzwert I_{(grenz)}, der zwischen 10 und 20 A, insbesondere zwischen 10 und 15 A und vorzugsweise beispielsweise bei einem Winkelschleifer-Motor bei 12 bis 14 A liegt. Mit steigender Belastung sinkt damit, die Frequenz der durch den Frequenzumrichter an den Motor angelegten Motorerregerspannung und damit auch die Motordrehzahl M. Man hat daher in etwa die Charakteristik eines Stromwendermotors, außerhalb des regelbaren Bereichs. Damit verhält sich das erfindungsgemäße Elektrowerkzeuggerät so, wie es Benutzer von Geräten mit Universalmotoren gewohnt sind, also dass die Drehzahl des Motors mit steigender Belastung spürbar sinkt. Dieses Gebiet ist in Fig. 2 mit II bezeichnet.

Wenn die Belastung weiter ansteigt, so wird am Ende des Gebiets II die Grenze der Regelbarkeit erreicht, was bedeutet, dass der Motorstrom nicht mehr allein durch Reduzieren der Frequenz der Motorerregerspannung konstant gehalten werden kann. Es wird in Weiterbildung der Erfindung dann sowohl die Frequenz als auch die Spannung reduziert, damit der Motorstrom I weiterhin auf gleichem Niveau gehalten werden kann. In diesem mit III bezeichneten Gebiet des Motordiagramms fällt dann die Kennlinie steil ab, d. h. die Motordrehzahl N nimmt mit der Belastung sehr stark ab, sodass ein Benutzer ohne Weiteres erkennen kann, dass der Motor in überlastetem Zustand dreht und dann die Belastung entsprechend reduzieren kann. Durch diese Steuerung im Gebiet III wird das Kippen des Motors verhindert. Bei Erreichen einer Grenzspannung U_{(grenz)} wird der Motor dann sicherheitshalber abgeschaltet, da andernfalls der Motorstrom nicht weiter konstant gehalten werden könnte. Alternativ hierzu kann eine geringe Resterregung aufrecht erhalten werden, sodass nach Wegnahme der Belastung der Motor wieder langsam anlaufen kann und dann selbsttätig wieder in den regelbaren Bereich gelangen kann.

## Patentansprüche

1. Elektrowerkzeuggerät, insbesondere Elektrohandwerkzeuggerät, mit einem Asynchronelektromotor (2) oder einem bürstenlosen Synchronelektromotor und einer rechnergesteuerten Motorsteuereinrichtung (8), **gekennzeichnet durch** einen von der Motorsteuereinrichtung steuerbaren Frequenzumrichter (4), mittels dessen eine Motor(erreger)spannung an den Motor (2) anlegbar ist, und **durch** einen den Motorstrom erfassenden und mit der Motorsteuereinrichtung (8) zusammenwirkenden Stromaufnehmer (10), und **dadurch**, dass die Motorsteuereinrichtung (8) so ausgebildet ist, dass in einer ersten Phase des Motorbetriebs bei Motorströmen bis zu einem Grenzstrom I_{(grenz)} die an den Motor angelegte Spannung und die Frequenz des Motorstroms konstant gehalten wird und dass in einer zweiten Phase des Motorbetriebs bei Belastungen oberhalb derjenigen Belastung, bei der der Motorstrom den Grenzstrom I_{(grenz)} erreicht, die an den Motor angelegte Spannung konstant gehalten wird und die Frequenz des Motorstroms so herabgesetzt wird, dass der Motorstrom bei einem konstanten Wert gehalten wird.

2. Elektrowerkzeuggerät nach Anspruch 1, **dadurch gekennzeichnet, dass** die Motorsteuereinrichtung (8) so ausgebildet ist, dass der Motorstrom während der zweiten Phase auf dem konstanten Wert I_{(grenz)} gehalten wird.

3. Elektrowerkzeuggerät nach Anspruch 1 oder 2, **dadurch gekennzeichnet, dass** die Motorsteuereinrichtung (8) so ausgebildet ist, dass die an den Motor angelegte Spannung während der ersten und der zweiten Phase auf dem gleichen Wert gehalten wird.

4. Elektrowerkzeuggerät nach einem oder mehreren der vorstehenden Ansprüche, **dadurch gekennzeichnet, dass** der Stromaufnehmer (10) einen Shunt-Widerstand (12) umfasst.

5. Elektrowerkzeuggerät nach einem oder mehreren der vorstehenden Ansprüche, **dadurch gekennzeichnet, dass** der Frequenzumrichter (4) und die Motorsteuereinrichtung (8) im Gehäuse des Elektrowerkzeuggeräts untergebracht sind.

6. Elektrowerkzeuggerät nach einem oder mehreren der vorstehenden Ansprüche, **dadurch gekennzeichnet, dass** der Grenzstrom I_{(grenz)} zwischen 4 und 20 A, insbesondere zwischen 10 und 15 A gewählt ist.

7. Elektrowerkzeuggerät nach einem oder mehreren der vorstehenden Ansprüche, **dadurch gekennzeichnet, dass** der Frequenzumrichter (4) und die Motorsteuereinrichtung (8) auf einer gemeinsamen Platine ausgebildet und/oder in einem geschlossenen Elektronikgehäuse angeordnet sind.

8. Elektrowerkzeuggerät nach einem oder mehreren der vorstehenden Ansprüche, **dadurch gekennzeichnet, dass** die Motorsteuereinrichtung (8) so ausgebildet ist, dass während einer dritten Phase des Motorbetriebs, die
**dadurch gekennzeichnet ist, dass** sich der Motorstrom bei weiter ansteigender Belastung nicht mehr allein durch Absenken der Frequenz des Motorstroms konstant halten lässt, auch die Motorspannung abgesenkt wird.

9. Elektrowerkzeuggerät nach Anspruch 8, **dadurch gekennzeichnet, dass** die Motorsteuereinrichtung (8) so ausgebildet ist, dass bei Erreichen einer Motorspannung U_{(grenz)} während der dritten Phase der Motor abgeschaltet wird.

10. Elektrowerkzeuggerät nach Anspruch 8, **dadurch gekennzeichnet, dass** die Motorsteuereinrichtung (8) so ausgebildet ist, dass bei Erreichen einer Motorspannung U_{(grenz)} während der dritten Phase anstelle eines Abschaltens des Motors eine Resterregung an den Motor angelegt wird, damit nach Wegnahme der Belastung der Motor selbsttätig wieder anläuft.

11. Verfahren zum Betreiben eines Elektrowerkzeuggeräts, insbesondere Elektrohandwerkzeuggeräts mit einem Asynchronelektromotor oder einem bürstenlosen Synchronelektromotor und einer rechnergesteuerten Motorsteuereinrichtung, **dadurch gekennzeichnet, dass** während einer ersten Phase des Motorbetriebs unter geringer Belastung bei Motorströmen bis zu einem Grenzstrom I_{(grenz)} die an den Motor angelegte Spannung und die Frequenz des Motorstroms konstant gehalten wird und dass in einer zweiten Phase des Motorbetriebs bei Belastungen oberhalb derjenigen Belastung, bei der der Motorstrom den Grenzstrom I_{(grenz)} erreicht, die an den Motor angelegte Spannung konstant gehalten wird und die Frequenz des Motorstroms so herabgesetzt wird, dass der Motorstrom bei einem konstanten Wert gehalten wird.

12. Verfahren nach Anspruch 11, **dadurch gekennzeichnet, dass** der Motorstrom während der zweiten Phase auf dem konstante Wert I_{(grenz)} gehalten wird.

13. Verfahren nach Anspruch 11 oder 12, **dadurch gekennzeichnet, dass** die an den Motor angelegte Spannung während der zweiten Phase auf einem konstanten Wert gehalten wird.

14. Verfahren nach Anspruch 11, 12 oder 13, **dadurch gekennzeichnet, dass** die an den Motor angelegte Spannung während der ersten und der zweiten Phase auf einem konstanten, insbesondere dem gleichen Wert gehalten wird.

15. Verfahren nach einem oder mehreren der Ansprüche 11 bis 14, **dadurch gekennzeichnet, dass** der Grenzstrom I_{(grenz)} zwischen 10 und 20 A, insbesondere zwischen 10 und 15. A gewählt wird.

16. Verfahren nach einem oder mehreren der Ansprüche 11 bis 15, **dadurch gekennzeichnet, dass** während einer dritten Phase des Motorbetriebs, die **dadurch gekennzeichnet ist, dass** sich der Motorstrom bei weiter ansteigender Belastung nicht mehr allein durch Absenken der Frequenz des Motorstroms konstant halten lässt, auch die Motorspannung abgesenkt wird.

17. Verfahren nach Anspruch 16, **dadurch gekennzeichnet, dass** bei Erreichen einer Motorspannung U_{(grenz)} während der dritten Phase der Motor abgeschaltet wird.

18. Verfahren nach Anspruch 16, **dadurch gekennzeichnet, dass** bei Erreichen einer Motorspannung U_{(grenz)} während der dritten Phase anstelle eines Abschaltens des Motors eine Resterregung an den Motor angelegt wird, damit nach Wegnahme der Belastung der Motor selbsttätig wieder anläuft.

## Claims

1. Electric tool device, in particular, manual electric tool device, comprising an asynchronous electromotor (2) or a brush-less synchronous electromotor and a computer-controlled motor control means (8), **characterized by** a frequency converter (4) which can be controlled by the motor control means for applying a motor (drive) voltage to the motor (2), and with a current detector (10) which detects the motor current and cooperates with the motor control means (8), wherein the motor control means (8) is designed such that, in a first phase of motor operation at motor currents of up to a limit current I₍ₗᵢₘᵢₜ₎, the voltage applied to the motor and the frequency of the motor current are kept constant and, in a second phase of motor operation at loads above that load at which the motor current reaches the limit current I₍ₗᵢₘᵢₜ₎, the voltage applied to the motor is kept constant and the frequency of the motor current is reduced such that the motor current is kept at a constant value.

2. Electric tool device according to claim 1, **characterized in that** the motor control device (8) is designed such that the motor current is kept at the constant value I₍ₗᵢₘᵢₜ₎ during the second phase.

3. Electric tool device according to claim 1 or 2, **characterized in that** the motor control means (8) is designed such that the voltage applied to the motor is kept at a same value during the first and second phases.

4. Electric tool device according to any one or more of the preceding claims, **characterized in that** the current detector (10) comprises a shunt resistance (12).

5. Electric tool device according to any one or more of the preceding claims, **characterized in that** the frequency converter (4) and the motor control means (8) are disposed in the housing of the electric tool device.

6. Electric tool device according to one or more of the preceding claims, **characterized in that** the limit current I₍ₗᵢₘᵢₜ₎ is selected between 4 and 20A, in particular between 10 and 15 A.

7. Electric tool device according to any one or more of the preceding claims, **characterized in that** the frequency converter (4) and the motor control means (8) are formed on a common plate and/or are disposed in a closed electronic housing.

8. Electric tool device according to any one or more of the preceding claims, **characterized in that** the motor control means (8) is designed such that, during a third phase of motor operation which is **characterized in that** the motor current cannot be kept constant merely by reducing the frequency of the motor current, the motor voltage is also lowered.

9. Electric tool device according to claim 8, **characterized in that** the motor control means (8) is designed such that when a motor voltage U₍ₗᵢₘᵢₜ₎ has been reached during the third phase, the motor is switched off.

10. Electric tool device according to claim 8, **characterized in that** the motor control means (8) is designed such that when a motor voltage U₍ₗᵢₘᵢₜ₎ has been reached during the third phase instead of switching off the motor, a residual excitation is applied to the motor to ensure that the motor automatically starts again after elimination of the load.

11. Method for operating an electric tool device, in particular, a manual electric tool device comprising an asynchronous electromotor or a brush-less synchronous electromotor and with a computer-controlled motor control means, **characterized in that** during a first phase of motor operation under low load at motor currents of up to a limit current I₍ₗᵢₘᵢₜ₎, the voltage applied to the motor and the frequency of the motor current are kept constant and, in a second phase of motor operation at loads above that load at which the motor current reaches the limit current I₍ₗᵢₘᵢₜ₎, the voltage applied to the motor is kept constant and the frequency of the motor current is reduced such that the motor current is kept at a constant value.

12. Method according to claim 11, **characterized in that** the motor current is kept at the constant value I₍ₗᵢₘᵢₜ₎ during the second phase.

13. Method according to claim 11 or 12, **characterized in that** the voltage applied to the motor is kept at a constant value during the second phase.

14. Method according to claim 11, 12 or 13, **characterized in that** the voltage applied to the motor is kept constant, in particular, at the same value, during the first and second phases.

15. Method according to any one or more of the claims 11 through 14, **characterized in that** the limit current I₍ₗᵢₘᵢₜ₎ is selected between 10 and 20A, in particular between 10 and 15A.

16. Method according to any one or more of the claims 11 through 15, **characterized in that** during a third phase of motor operation, which is **characterized in that** the motor current cannot be kept constant merely by reducing the frequency of the motor current in case of further increasing load, the motor voltage is also reduced.

17. Method according to claim 16, **characterized in that** when a motor voltage U₍ₗᵢₘᵢₜ₎ has been reached during the third phase, the motor is switched off.

18. Method according to claim 16, **characterized in that** when a motor voltage U₍ₗᵢₘᵢₜ₎ has been reached during the third phase instead of switching off the motor, a residual excitation is applied to the motor to ensure that the motor automatically starts again after elimination of the load.

## Revendications

1. Appareil-outil électrique, en particulier appareil-outil portatif électrique, comprenant un moteur électrique asynchrone (2) ou un moteur électrique synchrone sans brosse et un dispositif de commande de moteur (8) assisté par ordinateur, **caractérisé par** un convertisseur de fréquence (4) pouvant être commandé par le dispositif de commande de moteur, au moyen duquel une tension (excitatrice) de moteur peut être appliquée au moteur (2), et par un enregistreur de courant (10) détectant le courant du moteur et coopérant avec le dispositif de commande du moteur (8), et par le fait que le dispositif de commande du moteur (8) est conçu de telle sorte que, dans une première phase de l'exploitation du moteur, dans le cas de courants du moteur allant jusqu'à un courant limite I_{(grenz)}, la tension appliquée au moteur et la fréquence du courant du moteur sont maintenues constantes et en ce que, dans une seconde phase d'exploitation du moteur, en cas de charges supérieures à la charge à laquelle le courant du moteur atteint le courant limite I_{(grenz)}, la tension appliquée au moteur est maintenue constante et la fréquence du courant du moteur est diminuée de telle sorte que le courant du moteur est maintenu à une valeur constante.

2. Appareil-outil électrique selon la revendication 1, **caractérisé en ce que** le dispositif de commande du moteur (8) est conçu de telle sorte que le courant du moteur est maintenu pendant la seconde phase à la valeur I_{(grenz)} constante.

3. Appareil-outil électrique selon la revendication 1 ou 2, **caractérisé en ce que** le dispositif de commande du moteur (8) est conçu de telle sorte que la tension appliquée au moteur est maintenue à la même valeur pendant la première et la seconde phases.

4. Appareil-outil électrique selon l'une quelconque ou plusieurs des revendications précédentes, **caractérisé en ce que** l'enregistreur de courant (10) comprend une résistance de shunt (12).

5. Appareil-outil électrique selon l'une quelconque ou plusieurs des revendications précédentes, **caractérisé en ce que** le convertisseur de fréquence (4) et le dispositif de commande du moteur (8) sont logés dans le boîtier de l'appareil-outil électrique.

6. Appareil-outil électrique selon l'une quelconque ou plusieurs des revendications précédentes, **caractérisé en ce que** le courant limite I_{(grenz)} est choisi entre 4 et 20 A, en particulier entre 10 et 15 A.

7. Appareil-outil électrique selon l'une quelconque ou plusieurs des revendications précédentes, **caractérisé en ce que** le convertisseur de fréquence (4) et le dispositif de commande du moteur (8) sont réalisés sur une platine commune et/ou sont disposés dans un boîtier électronique fermé.

8. Appareil-outil électrique selon l'une quelconque ou plusieurs des revendications précédentes, **caractérisé en ce que** le dispositif de commande du moteur (8) est réalisé de telle sorte que, pendant une troisième phase d'exploitation du moteur, qui est **caractérisée par le fait que** le courant du moteur ne peut plus être maintenu constant uniquement par l'abaissement de la fréquence du courant du moteur lorsque la charge augmente à nouveau, la tension du moteur est abaissée également.

9. Appareil-outil électrique selon la revendication 8, **caractérisé en ce que** le dispositif de commande du moteur (8) est réalisé de telle sorte que le moteur est déconnecté lorsqu'on atteint une tension de moteur U_{(grenz)} pendant la troisième phase.

10. Appareil-outil électrique selon la revendication 8, **caractérisé en ce que** le dispositif de commande du moteur (8) est réalisé de telle sorte que, lorsqu'on atteint une tension de moteur U_{(grenz)} pendant la troisième phase, on applique une excitation résiduelle au moteur au lieu d'une déconnexion du moteur, pour que, après la suppression de la charge, le moteur redémarre automatiquement.

11. Procédé pour l'exploitation d'un appareil-outil électrique, en particulier d'un appareil-outil portatif électrique avec un moteur électrique asynchrone ou un moteur électrique synchrone sans brosse et un dispositif de commande du moteur (8) assisté par ordinateur, **caractérisé en ce que** pendant une première phase d'exploitation du moteur, avec une faible charge en cas de courants du moteur allant jusqu'à un courant limite I_{(grenz)}, la tension appliquée au moteur et la fréquence du courant du moteur sont maintenues constantes et **en ce que**, pendant une seconde phase d'exploitation du moteur, en cas de charges supérieures à la charge à laquelle le courant du moteur atteint le courant limite I_{(grenz)}, la tension appliquée au moteur est maintenue constante et la fréquence du courant du moteur est abaissée de telle sorte que le courant du moteur est maintenu sur une valeur constante.

12. Procédé selon la revendication 11, **caractérisé en ce que** le courant du moteur est maintenu à la valeur I_{(grenz)} constante pendant la seconde phase.

13. Procédé selon la revendication 11 ou 12, **caractérisé en ce que** la tension appliquée au moteur est maintenue à une valeur constante pendant la seconde phase.

14. Procédé selon la revendication 11, 12 ou 13, **caractérisé en ce que** la tension appliquée au moteur est maintenue à une valeur constante, en particulier la même valeur, pendant la première et la seconde phases.

15. Procédé selon l'une quelconque ou plusieurs des revendications 11 à 14, **caractérisé en ce que** le courant limite I_{(grenz)} est choisi entre 10 et 20 A, en particulier entre 10 et 15 A.

16. Procédé selon l'une quelconque ou plusieurs des revendications 11 à 15, **caractérisé en ce que**, pendant une troisième phase d'exploitation du moteur, qui est **caractérisée en ce que** le courant du moteur ne peut plus être maintenu constant uniquement par l'abaissement de la fréquence du courant du moteur dans le cas d'une charge à nouveau croissante, la tension du moteur est également abaissée.

17. Procédé selon la revendication 16, **caractérisé en ce que** le moteur est déconnecté lorsqu'on atteint une tension du moteur U_{(grenz)} pendant la troisième phase.

18. Procédé selon la revendication 16, **caractérisé en ce que**, lorsqu'on atteint une tension du moteur U_{(grenz)} pendant la troisième phase, une excitation résiduelle est appliquée au moteur au lieu d'une déconnexion du moteur, pour que, après la suppression de la charge, le moteur redémarre automatiquement.
